# EUROPEAN PATENT APPLICATION

(11) **EP 4 675 787 A1**
(43) Date of publication of application: **07.01.2026**
(21) Application number: 24763464.5
(22) Date of filing: 30.01.2024
(51) Int. Cl.: H01M 50/204, H01M 10/613, H01M 10/625, H01M 10/627, H01M 10/643, H01M 10/647, H01M 10/6563, H01M 50/209, H01M 50/213, H01M 50/342, H01M 50/35, H01M 50/367, H01M 50/383

(54) **POWER SOURCE DEVICE**

(30) Priority: 28.02.2023 JP 2023030510
(71) Applicant: Panasonic Energy Co., Ltd., Osaka 570-8511 (JP)
(72) Inventor: AOKI, Tomoaki, Osaka 571-0057 (JP); NAKAMURA, Ginga, Osaka 571-0057 (JP); HEGURI, Katsuyoshi, Osaka 571-0057 (JP); BABA, Takeshi, Osaka 571-0057 (JP)
(74) Representative: Eisenführ Speiser
(86) International application number: PCT/JP2024/002837
(87) International publication number: WO 2024/180979

(57) **Abstract**

To safely discharge a jet substance from battery cells to prevent an external fire and have improved cooling performance, a power supply device includes a battery block 10 including multiple battery cells 1 and a case 2 housing the battery block 10. The case 2 includes a mesh portion 40 having air holes 41 with an opening size (a) less than or equal to 4 mm through which cooling air to cool an internal component is drawn in, an expansion chamber 53 between an inner surface of the case 2 including the mesh portion 40 and the battery block 10, and a guide clearance 51 between the inner surface of the case 2 and the battery block 10. The air holes 41 have a total opening area larger than a cross-sectional area of the guide clearance 51. The power supply device allows the jet substance discharged to the guide clearance 51 and expanding adiabatically to flow into the expansion chamber 53 to be discharged outside the case 2 through the air holes 41, and allows the cooling air flowing into the expansion chamber 53 through the air holes 41 to be blown to a surface of the battery block 10.

## Description

### TECHNICAL FIELD

The present disclosure relates to a power supply device incorporating heat-generating components, and more specifically, to a power supply device including a case housing battery cells each including a discharge valve that opens in response to an abnormality to discharge a jet substance.

### BACKGROUND ART

Power supply devices with a battery block of multiple battery cells housed in a case are used in power storage systems for factory or household use or in vehicles such as hybrid vehicles and electric vehicles. Such a power supply device incorporating a battery block of multiple battery cells housed in a case includes a discharge valve in each battery cell for safety purpose. To prevent the battery case from bursting, the discharge valve in each battery cell opens in response to an abnormality. The discharge valve opens in response to an abnormal use of the battery to discharge a jet substance with high temperature and pressure, possibly causing various thermal issues. The jet substance with high temperature discharged from the case may burst into flames. For safety purpose, such power supply devices can have a structure to prevent an external fire. These power supply devices are also requested to have cooling performance for cooling heat-generating components that generate heat, such as battery blocks and power supplies.

### CITATION LIST

### PATENT LITERATURE

Patent Literature 1: WO 2020/039722

### SUMMARY OF INVENTION

### TECHNICAL PROBLEM

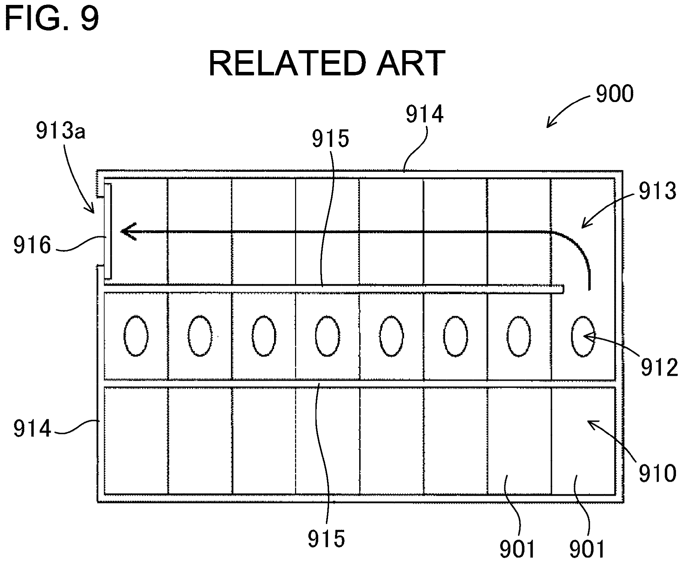

Power supply devices with an external fire prevention structure have been developed. For example, Patent Literature 1 describes a power supply device 900 including a cooling path 913 to cool a gas discharged through discharge valves 912 in battery cells 901 and discharge the gas outside a case 914 as shown in the cross-sectional view in FIG. 9. The cooling path 913 causes the gas to have a temperature T (°C) lower than or equal to 500 °C at a path outlet 913a. The cooling path 913 includes a filter 916 or a baffle plate and has a substantially U shape defined by partitions 915 to reduce the temperature of a jet substance to be discharged. The filter 916 or the baffle plate has openings sized less than or equal to 3.5 mm for passage of the jet substance to prevent an external fire. The cooling path 913 uses, for example, the filter 916 to reduce the temperature T of the gas discharged through the path outlet 913a, preventing an external fire. The cooling path 913 can be extended to reduce the temperature of the discharged gas. However, to maintain the temperature of the jet substance passing through the cooling path 913 constantly at 350 °C or lower and prevent an external fire, the cooling path 913 is to be particularly long. The cooling path 913 is thus to include, for example, the filter 916 with the opening size less than or equal to 3.5 mm. The filter 916 is, for example, a mesh (wire mesh) of many metal wires knitted together or a porous plate with multiple circular openings. The filter 916, which allows the high-temperature jet substance to pass through, is to be formed from a porous material with high heat resistance, such as metal, a ceramic material, or a glass-based material.

The power supply device 900 in FIG. 9 includes the cooling path 913 that includes, for example, the filter 916 and has a substantially U shape defined by the partitions 915. The power supply device 900 thus reduces the temperature of a high-temperature, high-pressure jet substance discharged from the battery cells 901, thus preventing an external fire outside the case 914. However, the power supply device 900 including the cooling path 913 that includes, for example, the filter 916 and has a substantially U shape defined by the partitions 915 cannot efficiently cool a battery block 910 through the cooling path 913. This power supply device thus cannot easily achieve contradictory effects of both external fire prevention and improved cooling performance.

In response to the above issue, one or more aspects of the present disclosure are directed to a power supply device that achieves contradictory effects of external fire prevention and improved cooling performance.

### SOLUTION TO PROBLEM

A power supply device according to an aspect of the present disclosure includes a battery block including a plurality of battery cells in position and a case having a closed structure and housing the battery block. Each of the plurality of battery cells includes a discharge valve that opens in response to an internal pressure of the battery cell exceeding a set value. The case includes a mesh portion having a plurality of air holes through which cooling air to cool an internal component is drawn in. Each of the plurality of air holes has an opening size (a) less than or equal to 4 mm. The case includes an expansion chamber between an inner surface of the case including the mesh portion and the battery block to receive a jet substance discharged from the plurality of battery cells, and a guide clearance between the inner surface of the case and the battery block to guide the jet substance discharged from the plurality of battery cells to the expansion chamber. The plurality of air holes in the mesh portion have a total opening area larger than a cross-sectional area of the guide clearance. The power supply device allows the jet substance discharged to the guide clearance and expanding adiabatically to flow into the expansion chamber to be discharged outside the case through the plurality of air holes, and allows the cooling air flowing into the expansion chamber through the plurality of air holes to be blown to a surface of the battery block.

### ADVANTAGEOUS EFFECTS OF INVENTION

The power supply device according to the above aspect of the present disclosure achieves contradictory effects of preventing an external fire caused by a high-temperature, high-pressure jet substance discharged from the battery cells and efficiency in cooling the battery block housed in the case.

### BRIEF DESCRIPTION OF DRAWINGS

FIG. 1 is a schematic perspective view of a power supply device according to Embodiment 1 of the present disclosure;
FIG. 2 is a schematic cross-sectional view of the power supply device in FIG. 1;
FIG. 3 is a schematic horizontal cross-sectional view of a power supply device;
FIG. 4 is a schematic vertical cross-sectional view of a power supply device;
FIG. 5 is a schematic diagram of air holes in an example;
FIG. 6 is a schematic diagram of air holes in another example;
FIG. 7 is a schematic diagram of air holes in another example;
FIG. 8 is a graph showing the correlation between gas discharge temperature and opening size; and
FIG. 9 is a schematic plan view of an example of a known power supply device.

### DESCRIPTION OF EMBODIMENTS

One or more embodiments of the present disclosure will now be described in detail with reference to the drawings. Terms indicating specific directions or positions (e.g., upward, downward, and other similar terms) are hereafter used as appropriate to facilitate understanding of the disclosure. Although such terms specify directions or positions with reference to the drawings, the terms do not limit the technical scope of the present disclosure. The same reference numerals denote the same or similar parts or components in the drawings.

One or more embodiments described below are mere examples of the technical ideas of the present disclosure, and the present disclosure is not limited to the embodiments described below. The dimensions, materials, shapes, and relative positions of the components described below are mere examples and are not intended to limit the scope of the present disclosure, unless otherwise specified. An embodiment or an example described below may be applicable to other embodiments or examples. The sizes and the positional relationships of the components shown in the drawings may be exaggerated for clarity.

A power supply device according to one embodiment of the present disclosure includes a battery block including a plurality of battery cells in position and a case having a closed structure and housing the battery block. Each of the plurality of battery cells includes a discharge valve that opens in response to an internal pressure of the battery cell exceeding a set value. The case includes a mesh portion having a plurality of air holes through which cooling air to cool an internal component is drawn in. Each of the plurality of air holes has an opening size (a) less than or equal to 4 mm. The case includes an expansion chamber between an inner surface of the case including the mesh portion and the battery block to receive a jet substance discharged from the plurality of battery cells, and a guide clearance between the inner surface of the case and the battery block to guide the jet substance discharged from the plurality of battery cells to the expansion chamber. The plurality of air holes in the mesh portion have a total opening area larger than a cross-sectional area of the guide clearance. The power supply device allows the jet substance discharged to the guide clearance and expanding adiabatically to flow into the expansion chamber to be discharged outside the case through the plurality of air holes, and allows the cooling air flowing into the expansion chamber through the plurality of air holes to be blown to a surface of the battery block.

This power supply device achieves contradictory effects of preventing an external fire ignited when the jet substance discharged from the battery cells in response to an abnormality is discharged outside the case and efficiency in cooling the battery block in the case. An external fire caused by the jet substance discharged outside the case is reliably prevented by discharging the jet substance through the guide clearance into the expansion chamber to reduce the temperature of the jet substance through adiabatic expansion. An external fire is reliably prevented also by causing the jet substance to flow through the guide clearance into the expansion chamber and diffuse into the air in the expansion chamber and by discharging the jet substance diffused in the expansion chamber outside the case through the multiple air holes with the small opening size less than or equal to 4 mm. With the limited opening size, the mesh portion can prevent sparks that may cause an external fire or flames ignited in the case from bursting outside the case to be an external fire. The guide clearance having a limited cross-sectional area can guide the jet substance with momentum in a direction not to reach the air holes directly. The guide clearance can guide the jet substance in a predetermined moving direction in which, for example, the jet substance flows through a longer flow path before being discharged outside the case or the jet substance stays in the case for a longer time, thus lowering the energy of the jet substance and reducing the temperature of the jet substance. The multiple air holes in the mesh portion having the total opening area larger than the cross-sectional area of the guide clearance allow the jet substance to be discharged smoothly. The jet substance flowing through the narrow guide clearance into the expansion chamber can adiabatically expand more effectively. The structure also allows cooling air to be drawn in smoothly. The battery block in a normal state in which the battery cells do not discharge a jet substance is cooled efficiently in the expansion chamber located between the case and the battery block. The cooling air is drawn into the expansion chamber through the multiple air holes in the mesh portion in the case to be blown to the surface of the battery block defining the expansion chamber in the case.

A power supply device according to another embodiment of the present disclosure may include a blower fan fixed to the mesh portion in the case. The blower fan may blow the cooling air drawn in or discharged through the plurality of air holes to the guide clearance to cool the battery block. This power supply device may include the blower fan located inward or outward from the mesh portion in the case. The blower fan can draw in air outside the case through the air holes and blows the outside air to the cooling surface of the battery block. The blower fan discharges the air in the case outside the case through the air holes, thus facilitating airflow and ventilation in the case. The blower fan causes the cooling air to flow and blows the cooling air, thus effectively cooling the battery block. The blower fan fixed to the mesh portion, including a housing case for the blower fan, also functions as a flame retardant wall that prevents sparks or flames from bursting outside the case, contributing to external fire prevention. The housing case for the blower fan may have a surface with a heat-resistant material.

In a power supply device according to another embodiment of the present disclosure, the opening size (a) of each of the plurality of air holes may be less than or equal to 3.5 mm. This power supply device, which has the air holes having the small opening size less than or equal to 3.5 mm, can effectively prevent an external fire caused by the high-temperature jet substance discharged from the battery cells.

In a power supply device according to another embodiment of the present disclosure, the plurality of air holes may be slits. The mesh portion may have the plurality of air holes arranged in multiple rows and parallel to one another. This power supply device can increase the opening area of the air holes to smoothly discharge the jet substance outside the case. The power supply device can quickly discharge the jet substance outside the case and effectively reduce the temperature of the jet substance through adiabatic expansion in the expansion chamber, thus preventing thermal issues caused by the high-temperature jet substance in the case.

In a power supply device according to another embodiment of the present disclosure, the expansion chamber may be located in an end portion of the case in a longitudinal direction of the case. This power supply device can effectively use, as the expansion chamber, the end portion of the elongated case. Further, This power supply device causes the cooling air to flow in the longitudinal direction of the elongated case and can thus efficiently cool the battery block.

In a power supply device according to another embodiment of the present disclosure, the case may include an end face plate closing an open end of a case body being cylindrical. The mesh portion may be located in the end face plate. The expansion chamber may be located in an end portion of the case body. The guide clearance may be located along an inner surface of the case body.

In a power supply device according to another embodiment of the present disclosure, the battery block may have a discharge surface facing the inner surface of the case body, and the discharge surface may include first end faces of the plurality of battery cells aligned flush with one another. The guide clearance may be located between the inner surface of the case body and the discharge surface of the battery block. This power supply device includes the multiple battery cells arranged in the longitudinal direction of the power supply device, and guides the jet substance discharged from each battery cell into the guide clearance to discharge the jet substance outside the case through the expansion chamber.

A power supply device according to another embodiment of the present disclosure may include a hit wall at a hitting position of the jet substance discharged from the guide clearance. The hit wall may disperse the jet substance. This power supply device causes the jet substance discharged from the guide clearance to hit the hit wall to redirect the jet substance. The jet substance thus flows through a longer flow path before being discharged outside the case and stays in the case for a longer time. This lowers the energy of the jet substance and reduces the temperature of the jet substance. This power supply device causes the jet substance discharged from the guide clearance to hit the hit wall and diffuse into the expansion chamber. Thus, this power supply device can more uniformly disperse the jet substance flowing into the expansion chamber from the guide clearance and discharge the jet substance outside the case through the multiple air holes.

A power supply device 100 uses nonaqueous electrolyte secondary battery cells such as lithium-ion battery cells to be lighter and to have higher capacity. However, such a power supply device can burst due to a higher internal pressure when used abnormally. To prevent this, battery cells 1 each include a discharge valve 12 that opens when the internal pressure exceeds a set pressure. The discharge valve 12 opens to discharge a jet substance through an opening 12a to prevent a burst. The jet substance, which has a particularly high temperature and a particularly high pressure, may cause a fire when discharged outside a case 2. Such an external fire is to be prevented for safety purpose. The power supply device 100 includes the battery cells 1 and other heat-generating components inside. To prevent thermal issues caused by heat from these components, the power supply device 100 is also to have cooling performance for cooling these heat-generating components.

### [EMBODIMENT 1]

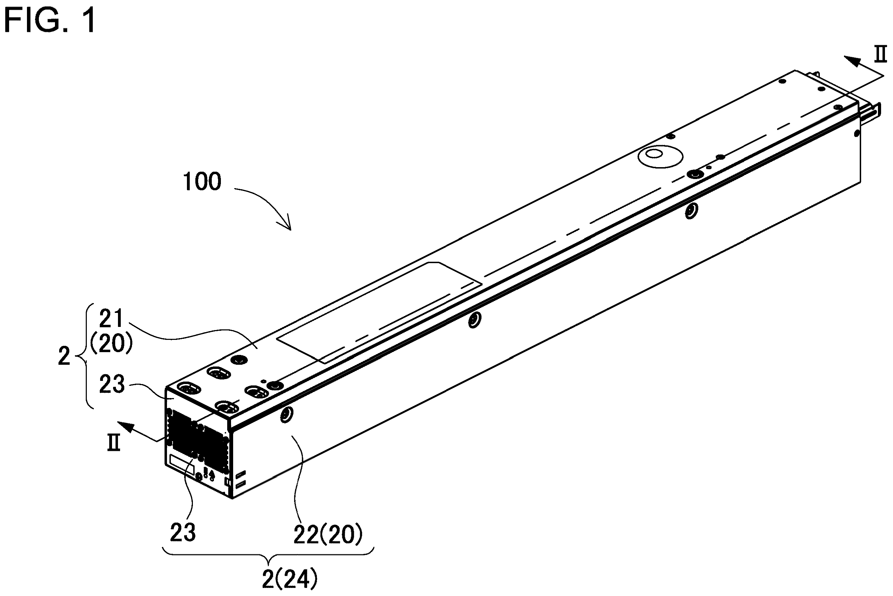

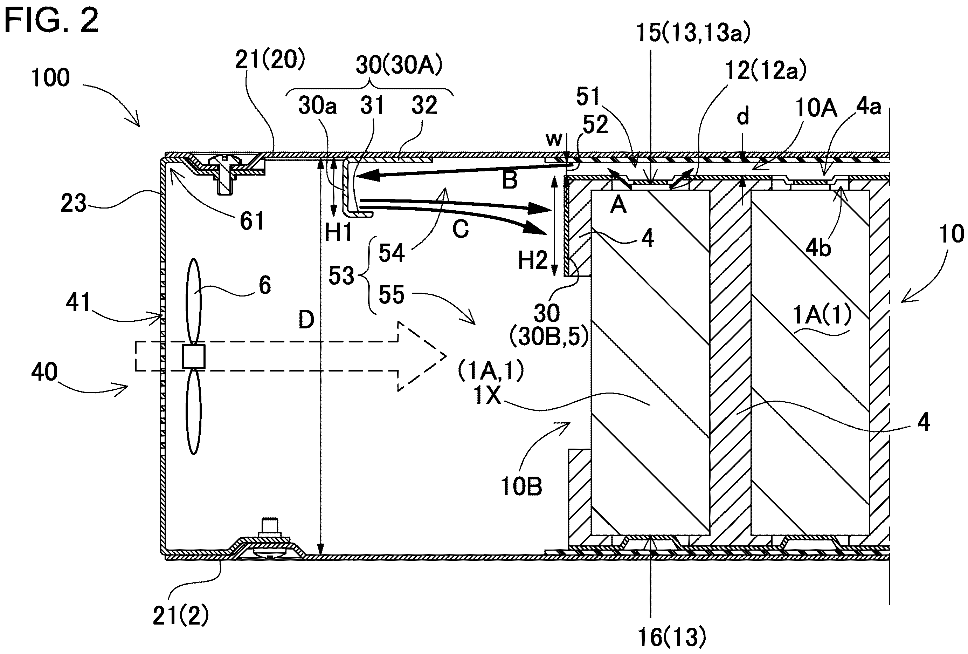

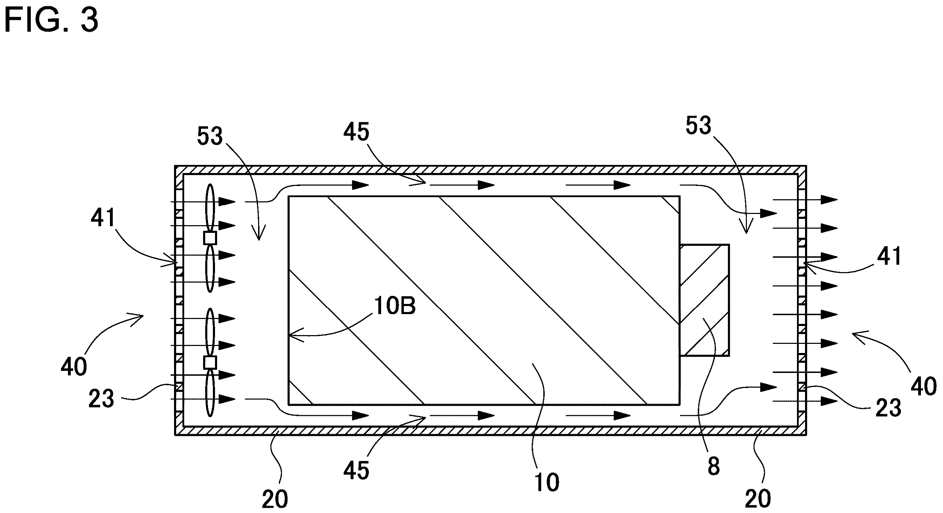

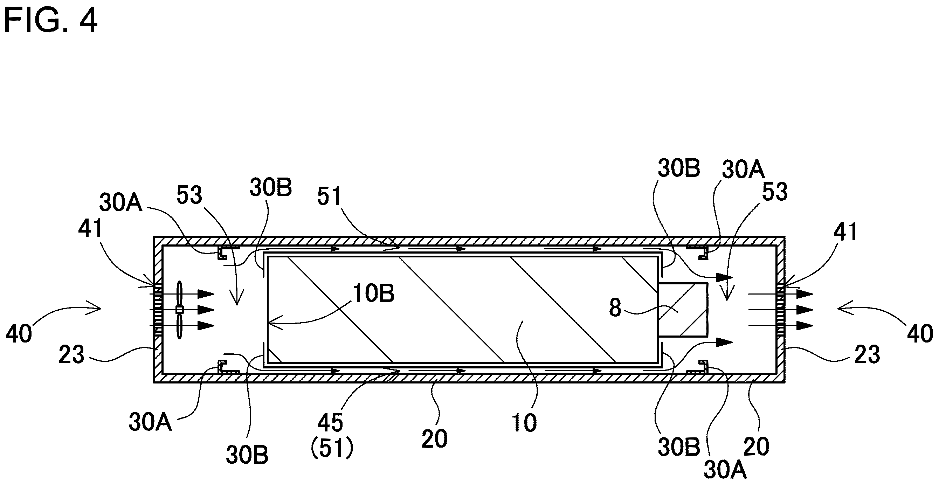

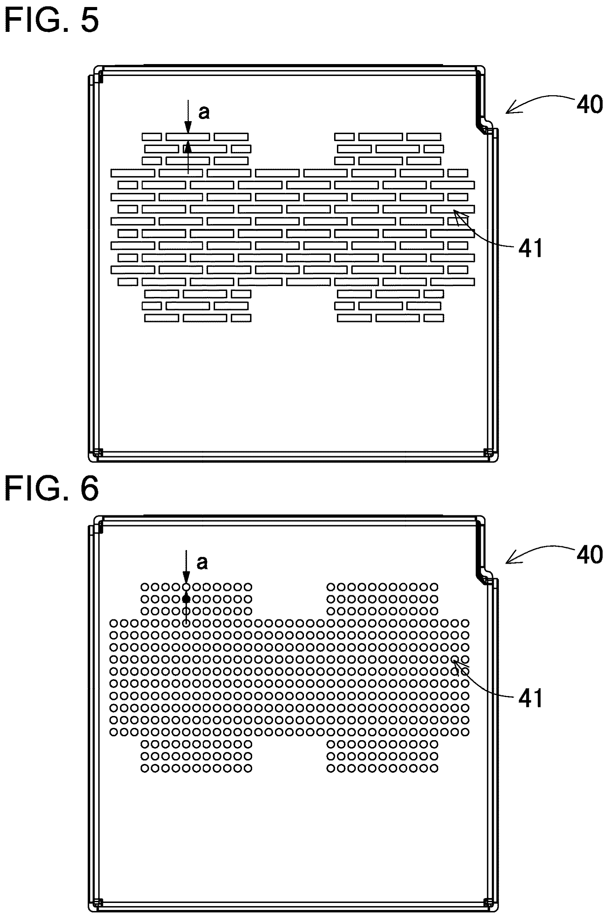

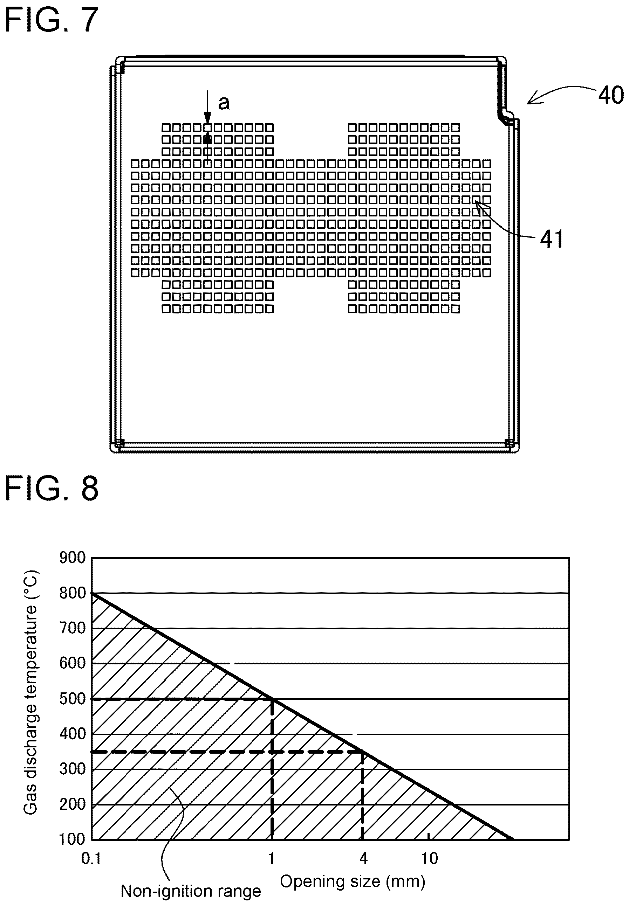

FIG. 1 is a schematic cross-sectional view of the entire power supply device 100. FIG. 2 is a schematic cross-sectional view of the power supply device 100 showing its end portion. FIGs. 3 and 4 are respectively a schematic horizontal cross-sectional view and a schematic vertical cross-sectional view of a power supply device. FIGs. 5 to 7 are each a schematic diagram of example air holes. FIG. 8 is a graph showing the correlation between gas discharge temperature and opening size.

The power supply device 100 includes, in the case 2, a battery block 10 including the multiple battery cells 1. The case 2 has a closed structure that closes the end faces of a case body 20 with end face plates 23, and houses the battery block 10 inside.

### (Battery Cell 1)

The battery cells 1 are secondary batteries each having a first end face 15 with the opening 12a of the discharge valve 12. The battery cells 1 may be lithium-ion batteries. The power supply device 100 including the lithium-ion batteries, which have a large charge and discharge capacity relative to their capacity and weight, can have a larger charge and discharge capacity, as well as having a smaller external size and a lighter weight. However, the power supply device 100 according to one or more embodiments of the present disclosure may include the battery cells 1 that are not lithium-ion batteries, and may include other secondary batteries that are currently available or are to be developed later, or for example, any other rechargeable batteries such as nonaqueous electrolyte secondary batteries other than lithium-ion batteries or solid-state batteries.

Each battery cell 1 includes positive and negative electrodes 13 on its two ends. Each battery cell 1 in FIG. 1 has the opening 12a of the discharge valve 12 in its upper end face in the figure. The battery cell 1 has the first end face 15 that is an end face adjacent to the discharge valve 12 and a second end face 16 opposite the first end face 15. The battery block 10 includes cylindrical batteries 1A as the battery cells 1. The cylindrical batteries 1A each include a cylindrical metal case housing electrodes and an electrolyte. The metal case is an exterior can having a closed bottom and an opening to which a seal plate is hermetically fixed. The metal case thus has a sealed structure. The exterior can is formed by pressing a metal plate. The seal plate is hermetically fixed to the periphery of the opening of the exterior can by clinching with an insulating gasket between the seal plate and the periphery of the opening. The battery cells are not limited to the cylindrical batteries and may be any batteries each having the first end face with the opening of the discharge valve and the electrodes, such as rectangular batteries.

Each battery cell 1 includes the discharge valve 12 to prevent the metal case from breaking when the internal pressure of the metal case increases abnormally. For example, in each cylindrical battery 1A, the opening of the exterior can, which is formed by pressing a metal plate, is hermetically sealed with the seal plate. The discharge valve 12 is located on the seal plate. The discharge valve 12 has the opening 12a to discharge, for example, an internal gas with the discharge valve 12 being open. The end face of the battery cell 1 adjacent to the discharge valve is the first end face 15 of the battery cell 1. A cylindrical battery or a rectangular battery may have the opening of the discharge valve in a bottom plate of the exterior can and have the surface of the bottom plate as the electrodes. The battery cell may thus have a bottom surface of the exterior can as the first end face with the opening of the discharge valve and the electrodes. The discharge valve 12 opens when the internal pressure exceeds the set pressure, or for example, 1.5 MPa, to prevent breakage of the exterior can due to an increase in the internal pressure. The discharge valve 12 opens in response to an abnormality. Thus, the battery cell 1 also has a particularly high temperature when the discharge valve 12 is open. The jet substance including, for example, a discharge gas and the electrolyte discharged through the open discharge valve 12 has an abnormally high temperature and an abnormally high pressure. In particular, for the power supply device 100 including nonaqueous electrolyte secondary batteries such as lithium-ion batteries as the battery cells 1, the jet substance has an abnormally high temperature greater than or equal to 400 °C. For the lithium-ion batteries, which are filled with a nonaqueous electrolyte, the electrolyte with a high temperature may ignite with air to have a more abnormally high temperature when discharged outside the case 2. For other rechargeable batteries as well as the lithium-ion batteries, the jet substance discharged through the open discharge valve 12 has a high temperature. Thus, the energy of the jet substance is to be lowered and reduced to prevent a fire outside the case 2 for improved safety.

### (Battery Block 10)

The battery block 10 includes a battery holder 4 holding the multiple battery cells 1 in position without displacement, and a lead plate 5 connecting the battery cells 1 in series or in parallel. In the battery block 10, the battery cells 1 are arranged side by side and parallel to one another to collectively define a substantially rectangular prism. The battery block 10 has the first end faces 15 of the multiple battery cells 1 aligned flush with one another in the battery holder 4. The battery block 10 has, as a discharge surface 10A for the jet substance, a surface on which the first end faces 15 of the battery cells 1 are aligned flush with one another. Although the battery block 10A shown in FIG. 2 has the first end faces 15 of the battery cells 1 arranged adjacent to its upper surface, the battery block 10 may have the first end faces 15 of the battery cells 1 adjacent to its upper and lower surfaces to have the upper and lower surfaces of the battery block 10 as discharge surfaces 10A. When the upper and lower surfaces of the battery block 10 serve as the discharge surfaces 10A, a guide clearance 51 and a hit wall 30 (described later) are located adjacent to each of the upper and lower surfaces of the case body 20. For example, the upper surface of the battery block 10 is merely an example and represents a specific surface of the battery block 10. The specific surface may be a surface other than the upper surface. The battery block 10 has, as a cooling surface 10B, a surface to which cooling air is blown for cooling. In FIG. 2, the battery block 10 has a surface facing a mesh portion 40 as the cooling surface 10B.

As shown in the cross-sectional view in FIG. 2, the battery holder 4 has, in its portions covering the first end faces 15 of the battery cells 1, through-holes 4a through which the jet substance passes. The through-holes 4a have an internal dimension greater than the external dimension of protruding electrodes 13a of the battery cells 1. Each through-hole 4a receives the corresponding protruding electrode 13a, with a discharge clearance 4b for the jet substance left between the protruding electrode 13a and the through-hole 4a.

### (Case 2)

The case 2 with a closed structure, which is closed but not hermetically sealed, discharges the jet substance from the battery cells 1 outside the case 2. The case 2 has a closed structure that closes two ends of the case body 20 with the end face plates 23, and houses the battery block 10 inside. The case 2 is a hollow substantially rectangular prism that can accommodate the battery block 10 inside. The case 2 may have protrusions and recesses on its outer surface or inner surface. The case 2 has corners 61 that may be chamfered and may be partially curved. The case 2 shown in the perspective view in FIG. 1 is generally a rectangular prism with a quadrangular base. The case body 20 in FIG. 1 has upper, lower, and side surfaces that are rectangular, and is a quadrangular prism. The case body 20 is dividable into upper and lower parts. One of the parts receives the battery block and is connected to the other part. The two parts form the case body 20. Although not shown, the case may be dividable into, for example, an upper case and a lower case. The upper case and the lower case may be connected to each other, using the open end faces of their peripheral walls as connection surfaces. The case may include a case body and a lid case. The case body and the lid case may be connected to each other.

The case body 20 and the end face plates 23 of the case 2 may each be formed by pressing a metal plate. The case formed from metal has high heat resistance, high heat dissipation, and high shielding properties. The case with high heat dissipation can efficiently dissipate heat energy from the internal heat-generating components and the jet substance outside. The metal case with high shielding properties can reduce susceptibility to noise. The case body 20 and the end face plates 23 may be formed from a resin with high heat resistance, or for example, a thermoplastic resin with high strength and high heat resistance such as polycarbonate. The case may be a laminate of layers of a combination of different materials, or for example, metal and resin, with the different materials used for different portions of the case.

The case 2 has, in its inside, the guide clearance 51 to which the jet substance from the battery cells 1 is discharged and an expansion chamber 53 that receives the jet substance from the guide clearance 51. The guide clearance 51 is a narrow clearance between the discharge surface 10A of the battery block 10 and the case body 20. The expansion chamber 53 is a hollow chamber between one of the end face plates 23 and the cooling surface 10B of the battery block 10. In FIG. 2, the case 2 has, as the guide clearance 51, the narrow clearance between the discharge surface 10A that is the upper surface of the battery block 10 and the case body 20. The case 2 houses the battery block 10 inside with a clearance between the inner surface of an upper plate of the case body 20 and the discharge surface 10A of the battery block 10 to have the guide clearance 51. The battery block 10 is located in the case 2 with its surface facing the end face plate 23 serving as the cooling surface 10B of the battery block 10, thus defining the expansion chamber 53 between the end face plate 23 and the cooling surface 10B of the battery block 10. The case 2 houses the battery block 10 inside as described above. This structure causes the jet substance discharged from the battery block 10 to be discharged through the guide clearance 51 into the expansion chamber 53, adiabatically expand to decrease in temperature, diffuse in the expansion chamber 53, and be discharged outside the case 2 through multiple air holes 41 in a dispersed manner.

FIG. 2 is a schematic cross-sectional view of the case 2 with its end portion having the expansion chamber 53. When an abnormality occurs, the jet substance flowing from the guide clearance 51 diffuses in the expansion chamber 53 and is discharged outside the case 2 through the air holes 41 in the mesh portion 40. In the normal state, the cooling air in the expansion chamber 53 drawn in through the air holes 41 is blown to the cooling surface 10B of the battery block 10 to cool the battery block 10.

The cooling air is drawn in through the air holes 41 in one of the end face plates 23 of the case body 20 and blown to the cooling surface 10B of the battery block 10 to cool the battery block 10. After cooling the battery block 10, the cooling air is discharged outside the case 2 through open clearances in the case 2, such as air holes 41 in the other of the end face plates 23 shown in FIGs. 3 and 4. Although the structure according to one or more embodiments of the present disclosure does not specify the flow and the discharging manner of the cooling air, for example, the cooling air passes between the case body 20 and the side surfaces, the upper surface, or the lower surface of the battery block 10, through clearances between the battery cells 1, and through blowing ducts 45 to be discharged outside the case 2 through the open clearances in the case 2. As shown in the schematic horizontal cross-sectional view in FIG. 3, for example, the cooling air may be drawn in through the air holes 41 in the end face plate 23 at the left end of the case 2, cool the battery block 10 while passing through right and left discharge ducts 45 between the side surfaces of the battery block 10 and the side surfaces of the case body 20, and be discharged outside the case 2 through the air holes 41 in the end face plate 23 at the right end of the case 2. As shown in the schematic vertical cross-sectional view in FIG. 4, the cooling air may also cool the battery block 10 while passing through at least the guide clearance 51 between the upper surface (discharge surface 10A) of the battery block 10 and the upper surface of the case body 20 or the discharge duct 45 or the guide clearance 51 between the lower surface of the battery block 10 and the lower surface of the case body 20, and be discharged outside the case 2 through the air holes 41 in the end face plate 23 at the right end of the case 2. As shown in FIG. 4, the power supply device 100 guides the cooling air into the guide clearances 51 for discharging the jet substance to discharge the cooling air outside the case 2. The power supply device 100 may have expansion chambers 53 inward from the end face plates 23 at the two ends of the case 2 as shown in this figure, and discharge the jet substance outside the case 2 from the expansion chambers 53 adjacent to the two ends. The case 2 in FIG. 4 has the guide clearances 51 adjacent to both the upper and lower surfaces of the battery block to guide the jet substance and the cooling air. However, the jet substance and the cooling air may be guided through different channels or ducts.

### (Mesh Portion 40, Air Hole 41)

The mesh portion 40 has the multiple air holes 41. The air holes 41 allow the cooling air to be drawn in from outside the case 2. The end face plate 23, having the expansion chamber 53 inside, has the air holes 41 extending through the opposite surfaces of the end face plate 23. The air holes 41 are arranged in a middle portion of the power supply device 100 in the height direction of the power supply device 100. The air holes 41 are located not to face a first hit wall 30A in the height direction of the power supply device 100. The cooling air drawn into the expansion chamber 53 in the case 2 through the air holes 41 flows through a blowing duct area 55 and is blown to the cooling surface 10B of the battery block 10 to cool the battery block 10. The first hit wall 30A has a height, as well as the positional relationships with a blower fan 6 and a passage clearance 52, that allows the cooling air flowing through the blowing duct area 55 to flow into the passage clearance 52 in the guide clearance 51, to which the jet substance from the battery cells 1 is discharged. The cooling air is thus blown to the battery block 10 while flowing through the guide clearance 51, thus cooling the battery block 10. The cooling air flowing through the guide clearance 51 can cool the battery block 10 from an area near the discharge surface 10A. The jet substance discharged through the first end faces 15 of the battery cells 1 flows into the expansion chamber 53 from the guide clearance 51, adiabatically expands to decrease in temperature, diffuses, and is discharged outside the case 2 through the air holes 41.

In normal use, the power supply device 100 cools the cooling surface 10B of the battery block 10, which is located in the expansion chamber 53, with the cooling air flowing into the case 2 through the air holes 41 in the end face plate 23. When any discharge valve 12 opens in response to an abnormality, the power supply device 100 causes the high-temperature, high-pressure jet substance discharged through the opening 12a of the discharge valve 12 in the battery cell 1 to flow through the guide clearance 51 into the expansion chamber 53, adiabatically expand to decrease in temperature and diffuse in the expansion chamber 53, and be discharged outside the case 2 through the air holes 41, thus preventing an external fire.

The air holes 41 in FIG. 2 are arranged in the end face plate 23 closing the end face of the case 2. The end face plate 23 in the figure has the air holes 41 in its middle portion between the top and the bottom of the figure. The air holes 41 in the figure are at height positions between the distal end (lower end) of the first hit wall 30A and a lower surface plate 21. In FIG. 2, the cooling air is blown through the air holes 41 in the middle portion of the end face plate 23 toward the cooling end face 10B of the battery block. The multiple air holes 41 are arranged in the middle portion of the end face plate 23. The air holes 41 are thus arranged in a wide area. The multiple air holes 41 arranged in the wide area of the end face plate 23 allow a large amount of cooling air to be drawn in efficiently and blown toward a wide area of the cooling surface 10B, thus allowing efficient cooling.

As shown in FIG. 2, the air holes 41 in the middle portion of the end face plate 23 are arranged not to cause the jet substance flowing into the expansion chamber 53 from the guide clearance 51 to be directly discharged outside the case 2. This structure more reliably prevents the high-temperature, high-pressure jet substance from being directly discharged outside the case 2 and causing an external fire outside the case 2. This improves safety for external fire prevention.

The air holes 41 are openings through which air outside the case 2 is drawn in. In addition, the air holes 41 are openings through which the high-temperature, high-pressure jet substance discharged through the discharge valves 12 is discharged outside the case 2. The jet substance discharged through the discharge valves 12 passes through the air holes 41 and is discharged outside the case 2. The mesh portion 40 in FIG. 2 has the multiple air holes 41. The multiple air holes 41 allow outside air to be drawn in smoothly in a dispersed manner, and also allow the jet substance to be discharged outside the case 2 in a dispersed manner. The air holes 41 may have any shape. For example, the air holes 41 may be or may substantially be slits (FIG. 5), circular (FIG. 6), polygonal, or specifically, triangular, quadrangular (FIG. 7), or hexagonal, star-shaped, cross-shaped, oval, or reticulated, meshes. The air holes 41 have an opening size (a) appropriate for achieving both external fire prevention and cooling performance. The air holes with a smaller opening size (a) allow the high-temperature jet substance to be discharged outside the case 2, preventing an external fire. The opening size (a) of the air holes herein refers to an inner diameter (minor diameter) for circular air holes and to the diameter (minor diameter) of an inscribed circle for non-circular air holes.

In FIG. 8, the hatched area below the straight line (dot-dash lines) indicates a range (non-ignition range) in which the jet substance discharged outside the case 2 does not ignite, or in other words, the opening size (a) that does not cause the jet substance discharged outside the case 2 to cause an external fire in relation to the gas discharge temperature. In FIG. 8, the vertical axis indicates the gas discharge temperature (°C) that is the temperature of the jet substance, such as a gas, discharged outside the case 2 through the air holes 41 in the mesh portion 40. The horizontal axis indicates the opening size (mm) of the air holes 41 in the mesh portion 40. The opening size (a) of the air holes 41 defines the size of the jet substance discharged outside the case 2. Although the jet substance may or may not have the shape of a true sphere, the jet substance discharged through the air holes 41 has a size smaller than or equal to the cross-sectional area of the opening size (a). The jet substance with a high discharge temperature does not ignite outside the case 2 when the opening size (a) is within the hatched area. For example, when the jet substance with a discharge temperature of 350 °C is discharged outside the case 2 through the air holes 41 with the opening size (a) less than or equal to 4 mm, the jet substance does not ignite. The power supply device 100 according to one or more embodiments of the present disclosure causes the high-temperature, high-pressure jet substance discharged from the battery cells 1 to adiabatically expand to decrease in temperature using the guide clearance 51 and the expansion chamber 53, diffuse in the expansion chamber 53, and be discharged through the air holes. When the battery cells 1 discharge a particularly high-temperature jet substance, the discharge temperature of the jet substance discharged through the air holes 41 decreases to less than or equal to 350 °C. The air holes 41 having the opening size (a) less than or equal to 4 mm prevent the jet substance discharged outside the case 2 from causing an external fire.

The air holes 41 with a smaller opening size (a) can more effectively prevent an external fire. However, such smaller air holes 41 cause a greater permeation resistance and thus a greater pressure drop. A greater number of air holes 41, in particular, a greater number of air holes 41 as slits can have a larger total opening area, causing a smaller pressure drop. Thus, for example, the structure including many air holes 41 as slits in the mesh portion 40 in the end face plate 23 as shown in FIG. 5 causes a smaller pressure drop and can discharge the jet substance smoothly. In addition, the structure can draw in the cooling air smoothly and cools the battery block 10 efficiently. Further, in the structure including the multiple air holes 41 as slits arranged parallel to one another, the air holes 41 can have a larger total opening area in the mesh portion 40, thus causing a smaller pressure drop.

The opening size (a), the shape, and the number of air holes 41 are optimally designed based on the capacity of the battery cells 1, or in other words, the amount of jet substance discharged through the open discharge valves 12 and the flow of the cooling air drawn in. For example, for the power supply device 100 including, as the battery cell 1, cylindrical lithium-ion batteries commonly referred to as 18650, the opening size (a) of the air holes 41 may be 1 to 4 mm inclusive, or more specifically, 1 to 3.5 mm inclusive. The number of air holes 41 is set to an optimal value based on the opening size (a) and the shape of the air holes 41. The number of air holes 41 may be set, based on the transmission loss, to a number that allows the air holes 41 to have a total opening area greater than or equal to 5 cm² and to be arranged in the mesh portion 40 in the end face plate 23. The structure according to one or more embodiments of the present disclosure does not specify the opening size, the total opening area, the opening ratio, and the number of air holes. The opening size, the total opening area, the opening ratio, and the number of air holes are set to optimal values based on, for example, the type, the number, and the capacity of the battery cells as well as the safety and the cooling performance to be achieved.

The air holes 41 may be, for example, in a porous plate or a steel material filling a through-hole formed in the end face plate 23. The porous plate or the steel material may be prepared by forming many air holes 41 in a metal plate by, for example, punching or etching. The porous plate or the steel material may include a wire mesh. The mesh portion 40 may be a stack of multiple porous plates or steel materials. A porous plate or a steel material may be additionally stacked on a surface of the mesh portion 40 of the end face plate 23 having the multiple air holes 41. The end face plate 23 formed from metal and the porous plate or the steel material serving as the air holes 41 can avoid melting with heat from the jet substance. Metal with particularly high thermal conductivity can quickly absorb the heat from the jet substance and reduce the heat energy, thus more effectively preventing external fires. The porous plate or the steel material formed from metal used for the mesh portion 40 and the end face plate 23 can improve the cooling performance with the high thermal conductive properties of the metal. The metal may be, for example, stainless, iron, aluminum, or an alloy of these metals.

### (Guide Clearance 51)

The guide clearance 51 is a narrow clearance that allows the high-temperature, high-pressure jet substance discharged from any abnormal battery cell 1 to flow at high speed along the inner surface of the case body 20 to be discharged into the expansion chamber 53. In the power supply device 100 shown in FIG. 2, the upper surface of the battery block 10 serves as the discharge surface 10A for the jet substance. The power supply device 100 thus has the guide clearance 51 below an upper surface plate 21 of the case body 20 in the figure. The guide clearance 51 has the same width as the surface plate 21 of the case body 20. The guide clearance 51 has an inner dimension (d) between the surface plate 21 of the case body 20 and the discharge surface 10A of the battery block 10. The guide clearance 51 is a duct to discharge the jet substance discharged from the battery block 10 into the expansion chamber 53. The guide clearance 51 is located adjacent to the discharge surface 10A that is the upper surface of the battery block 10. For a power supply device including the case 2 housing the battery block 10 with its upper and lower surfaces serving as discharge surfaces 10A, guide clearances 51 may be located inward from the upper and lower surface plates 21 of the case body 20 to discharge the jet substance into the expansion chamber 53. For the case 2 housing the battery block 10 with one of its upper surface or lower surface serving as the discharge surface 10A rather than both the upper and lower surfaces serving as the discharge surfaces 10A, the guide clearance 51 may be located adjacent to the discharge surface 10A alone to discharge the jet substance outside the case 2. For the case 2 housing the battery block 10 with its lower surface serving as the discharge surface 10A, guide clearances 51 are located adjacent to the inner surfaces of the upper and lower surface plates 21 of the case body 20 to discharge the jet substance into the expansion chamber 53.

The guide clearance 51 with a narrower inner dimension (d) allows the jet substance to flow at high speed to be discharged into the expansion chamber 53. The guide clearance 51 with a wider inner dimension (d) allows the jet substance to be discharged into the expansion chamber 53 with a smaller pressure drop. The inner dimension (d) of the guide clearance 51 may be, for example, less than or equal to 5 mm, or more specifically, less than or equal to 3 mm as appropriate for the flow velocity and the pressure drop of the jet substance. This allows the jet substance to flow at high speed to be discharged into the expansion chamber 53. The jet substance is discharged through the narrow guide clearance 51 into the expansion chamber 53 having a large volume. The jet substance adiabatically expands to effectively decrease in temperature and pressure when discharged into the expansion chamber 53. A temperature decrease of the jet substance through adiabatic expansion occurs when the jet substance flows through the narrow guide clearance 51 into the expansion chamber 53 having a large volume and expands in volume. A greater temperature decrease through adiabatic expansion thus occurs when the guide clearance 51 has a narrower inner dimension (d) and the expansion chamber 53 has a larger volume. In the case 2 in FIG. 2, the guide clearance 51 and the expansion chamber 53 extend across the entire width of the upper surface plate 21 of the case body 20. The ratio between the inner dimension (d) of the guide clearance 51 and an internal dimension (D) between the upper and lower surface plates 21 of the case body 20 defining the expansion chamber 53, or d/D, may be set to less than or equal to 1/10, or more specifically, less than or equal to 1/30 to cause the guide clearance 51 to be narrower and the expansion chamber 53 to be larger. This can more effectively reduce the temperature and pressure of the jet substance through adiabatic expansion.

The guide clearance 51 allows the cooling air to pass through, flow, and be blown to cool the battery block 10 from an area near the guide clearance 51 (discharge surface 10A). The guide clearance 51 can contribute to both external fire prevention and cooling performance improvement, as well as to the size reduction and space saving of the case 2. The guide clearance 51 can increase an area through which the cooling air flows along the battery block 10 and also increase the amount of cooling air flowing and being blown around the battery block 10, thus improving the cooling performance. For example, the structure allows the cooling air to flow and be blown along the inner surface of the case body 10 adjacent to the side surfaces and the upper and lower surfaces of the battery block 10 shown in FIGs. 3 and 4, including the guide clearance 51, thus improving the cooling performance.

### (Expansion Chamber 53)

In the expansion chamber 53, the high-temperature, high-pressure jet substance discharged from the guide clearance 51 diffuses into the internal air and decreases in pressure and temperature, thus decreasing in kinetic energy and heat energy. The expansion chamber 53 shown in FIG. 2 is located inward from one end of the case body 20 and between one of the end face plates 23 and the cooling surface 10B of the battery block 10. The expansion chamber 53 shown in the cross-sectional view in FIG. 2 includes a redirection area 54 adjacent to the upper surface plate 21 of the case body 20 and the blowing duct area 55 below the redirection area 54. The expansion chamber 53 is an area to reduce and lower the temperature and the energy of the jet substance. The expansion chamber 53 is also used as an area to blow the cooling air to the battery block 10. In the blowing duct area 55, the cooling air flowing in through the air holes 41 is blown to the cooling surface 10B of the battery block 10 to cool the battery cells 1 in the normal state in which the battery cells 1 do not discharge a jet substance. For an abnormality in which any of the battery cells 1 discharges a jet substance, the jet substance flowing from the redirection area 54 is mixed with the internal air and diffuses in the blowing duct area 55 to be discharged outside through the air holes 41. The expansion chamber 53 thus includes the redirection area 54 into which the jet substance flows from the guide clearance 51. The redirection area 54 is located inward from the case body 20, and causes the jet substance to be discharged to the blowing duct area 55 in a middle portion of the expansion chamber 53 to be discharged outside the case 2 through the air holes 41.

In the redirection area 54, the jet substance flowing in from the guide clearance 51 is redirected to be discharged to the blowing duct area 55. The redirection area 54 in FIG. 2 includes the hit wall 30 that causes the jet substance flowing in to hit its surface and be dispersed. The hit wall 30 is at a hitting position of the jet substance flowing in from the guide clearance 51. The hit wall 30 redirects the jet substance by allowing the jet substance to hit its surface. A flow direction of the redirected jet substance changes from the direction indicated by an arrow B in FIG. 2 to the direction away from the end face plate 23 indicated by arrows C in FIG. 2. The jet substance is thus dispersed in the blowing duct area 55 without being directly discharged through the air holes 41, and discharged outside the case 2 through the air hole 41.

The hit wall 30 shown in the cross-sectional view in FIG. 2 includes a vertical plate 30a vertically fixed to the surface plate 21 of the case body 20 and a bent portion 31 at the lower edge of the vertical plate 30a. The hit wall 30 is thus groove-shaped in a cross section. The hit wall 30 is resistant to heat from the jet substance. The hit wall 30 may be formed by bending a metal plate. The hit wall 30 shown in FIG. 2 is formed by bending a metal plate to include a fixed portion 32 at the upper edge of the vertical plate 30a and the bent portion 31 at the lower edge of the vertical plate 30a. The fixed portion 32 is fixed to the inner surface of the case body 20. The hit wall 30 in FIG. 2 includes the fixed portion 32 fixed to the surface plate 21, the vertical plate 30a that is vertical to the surface plate 21, and the bent portion 31 parallel to the surface plate 21. The bent portion 31 protrudes toward the cooling surface 10A of the battery block 10 and guides the jet substance flowing from the guide clearance 51 to the vertical plate 30a that is a hit surface. The groove-shaped hit wall 30 causes the jet substance flowing from the guide clearance 51 to the redirection area 54 along the inner surface of the case body 20 to flow opposite to the end face plate 23 as indicated by the arrows C and diffuse into the blowing duct area 55.

One or more hit walls 30 may be arranged at hitting positions of the jet substance discharged from the guide clearance 51 to disperse the jet substance. The first hit wall 30A and a second hit wall 30B are arranged in the redirection area 55 in FIG. 2. The first hit wall 30A vertically fixed to the surface plate 21 is groove-shaped in a cross section. The second hit wall 30B faces the first hit wall 30A. The second hit wall 30B is a heat-resistant layer formed on the surface of the battery holder 4 in the battery block 10. The second hit wall 30B is integral with the battery block 10. The lead plate 5 or the battery holder 4 may be used as the second hit wall 30B. The second hit wall 30B may be stacked on the lead plate 5 or the battery holder 4. The second hit wall 30B may be a combination of the lead plate 5 and the battery holder 4. The second hit wall 30B in the figure is the lead plate 5 located on the surface of the battery holder 4. The lead plate 5 is a metal plate and has high heat resistance and high heat dissipation. The second hit wall 30B can be a thick lead plate adjacent to an output end having higher heat resistance and higher heat dissipation. The passage clearance 52 is left between the second hit wall 30B and the surface plate 21 of the case body 20 to allow the jet substance in the guide clearance 51 to flow toward the first hit wall 30A. The first hit wall 30A, the second hit wall 30B, the guide clearance 51, and the passage clearance 52 may be located on, near, or along the upper surface plate 21 of the case body 20, or may be located on, near, or along, for example, the lower surface plate or a side plate (not shown), in addition to the upper surface plate 21.

The second hit wall 30B is located adjacent to the cooling surface 10B of the battery block 10. The second hit wall 30B is located to allow the jet substance redirected by the first hit wall 30A to hit the second hit wall 30B and be dispersed in the blowing duct area 55. The second hit wall 30B shown in FIG. 2 is integral with the battery holder 10 and has the passage clearance 52 for the jet substance to be part of the guide clearance 51. This structure allows the jet substance flowing through the guide clearance 51 to smoothly pass through the passage clearance 52 and flow toward the first hit wall 30A. Although not shown, for example, the passage clearance between the case body and the second hit wall may be left to have an open clearance (w) narrower than the inner dimension (d) of the guide clearance, thus allowing the passage clearance to be used as an expansion valve to effectively achieve temperature decrease through adiabatic expansion. Conversely, the open clearance (w) may be left to be wider than the inner dimension (d) of the guide clearance, thus allowing the jet substance to smoothly flow into the expansion chamber from the guide clearance. The passage clearance 52 allows the jet substance flowing from the guide clearance 51 to pass through toward the surface of the first hit wall 30A. The redirection area 54 described above allows the jet substance flowing from the guide clearance 51 to hit the surface of the first hit wall 30A and be redirected in a direction toward the second hit wall 30B. The second hit wall 30B redirects the jet substance into the blowing duct area 55 in a dispersed manner.

The second hit wall 30B shown in the cross-sectional view in FIG. 2 may have a greater vertical width than the first hit wall 30A. For example, the second hit wall 30B may have a vertical width greater than or equal to 1.5 times, or more specifically, about twice the vertical width of the first hit wall 30A. This allows the jet substance redirected by the first hit wall 30A and flowing toward the surface of the second hit wall 30B to hit the surface more effectively, be dispersed in the blowing duct area 55, and be discharged.

The redirection area 54 described above, in which the first hit wall 30A and the second hit wall 30B face each other, allows the high-temperature, high-pressure jet substance flowing in to be mixed with the air in the blowing duct area 54 and dispersed uniformly to effectively decrease in both temperature and pressure. However, the structure of the redirection area in one or more embodiments of the present disclosure is not limited to the above structure, and may be any structure that can redirect the jet substrate flowing in and discharge the jet substance to the blowing duct area 55. Examples include, although not shown, a structure that redirects the jet substance with the first hit wall alone to disperse the jet substance to the blowing duct area and a structure that causes the jet substance to hit surfaces of multiple porous plates arranged apart in the flow direction of the jet substance to discharge the jet substance into the blowing duct area in a dispersed manner.

In the blowing duct area 55, cooling air is blown toward the cooling surface of the battery block 10 to cool the battery block 10 in the normal state in which the battery cells 1 do not discharge a jet substance. For an abnormality in which any of the battery cells 1 discharges a jet substance, the jet substance flowing from the redirection area 54 diffuses, is dispersed into the multiple air holes 41, and is discharged outside the case 2. The battery block 10 includes the cooling surface 10B located in the blowing duct area 54. The battery block 10 is cooled by the cooling air blown through the blowing duct area 54. The cooling air blown to the cooling surface 10B cools the surface of the battery cell 1 exposed from the battery holder 4, cools the battery cells 1 arranged inside through the battery holder 4, or cools the battery cells 1 with a thermal conductive layer (not shown) on the cooling surface 10B.

The power supply device 100 includes the blower fan 6 that forcibly blows the cooling air. The blower fan 6 may be located inward or outward from the end face plate 23 having the blowing duct area 55 inside. The blower fan 6 may be adjacent to or in contact with the air holes 41 in the mesh portion 40. The blower fan 6 is located on a surface facing the cooling surface 10B of the battery block 10. The blower fan 6 can efficiently blow the cooling air to the cooling surface 10B of the battery block 10 for cooling. The power supply device 100 in FIG. 2 includes the blower fan 6 on the end face plate 23, which has the expansion chamber 53 inside. In FIG. 2, the blower fan 6 is fixed in the blowing duct area 55 located inward from the end face plate 23. One or more blower fans 6 are arranged as appropriate for, for example, the arrangement of the air holes 41. For example, the end face plate 23 shown in FIG. 5 has the multiple air holes 41 in its middle portion in the vertical direction. This end face plate 23 has the multiple air holes 41 in a dispersed manner in an area wider in the width direction than in the vertical direction, and has two blower fans 6 arranged side by side on the inner surface (FIG. 3). For the end face plate 23 in FIG. 2, the blower fan 6 is fixed to the inner surface of the end face plate 23 in the middle portion in the vertical direction having the air holes 41.

The blower fan 6 in FIG. 2 draws in outside air through the air holes 41 and forcibly blows the air toward the cooling surface 10B of the battery block 10 as the cooling air. Although not shown, blower fans may be arranged on the end face plates at the two end faces. The blower fan 6 can draw in air, discharge air, or blow air through the air holes 41. Although not shown, the blower fan can discharge or blow the air in the case outside the case, thus causing outside air to be drawn into the case. The blower fan can facilitate airflow and ventilation in the case to cause the air to flow toward and be blown to the battery block 10 as the cooling air. The blower fan 6 causes outside air to pass through the air holes 41 and be drawn into the blowing duct area 55 in the expansion chamber 53, and blows the air toward the cooling surface 10B of the battery block 10. The cooling air blown toward the cooling surface 10B of the battery block 10 to cool the battery block 10 passes through the clearance between the battery block 10 and the case body 20, and is discharged outside the case 2 through the open clearances in the case 2, such as the air holes 41 in the other of the end face plates 23. The structure shown in FIGs. 3 and 4 draws in cooling air through the air holes 41 in one of the end face plates 23 and discharges the cooling air through the open clearances in the case 2 such as the air holes 41 in the other of the end face plates 23. This structure cools the battery block 10 by causing the air in the case 2 to flow and be ventilated as the cooling air without stagnation. The air further cools heat-generating semiconductor components such as a DC-DC converter as a power circuit, or a power supply 8, located opposite in the case 2 in the figure, and is discharged outside the case 2. In other words, the cooling air effectively cools the power supply 8, such as a DC-DC converter that generates heat at a high rate, together with the battery block 10.

### INDUSTRIAL APPLICABILITY

The technique according to the above aspects of the present disclosure is effectively applicable to a power supply device that has high cooling performance and safely discharges a high-temperature, high-pressure jet substance discharged from a battery cell to prevent an external fire.

### REFERENCE SIGNS LIST

- 100, 900: power supply device

- 1: battery cell
- 1A: cylindrical battery
- 1X: nearest battery cell
- 2: case
- 4: battery holder
- 4a: through-hole
- 4b: discharge clearance
- 5: lead plate
- 6: blower fan
- 8: power supply
- 10: battery block
- 10A: discharge surface
- 10B: cooling surface
- 12: discharge valve
- 12a: opening
- 13: electrode
- 13a: protruding electrode
- 15: first end face
- 16: second end face
- 20: case body
- 21: surface plate
- 22: side plate
- 23: end face plate
- 24: peripheral wall
- 30: hit wall
- 30A: first hit wall
- 30B: second hit wall
- 30a: vertical plate
- 31: bent portion
- 32: fixed portion
- 40: mesh portion
- 41: air hole
- 45: discharge duct
- 51: guide clearance
- 52: passage clearance
- 53: expansion chamber
- 54: redirection area
- 55: blowing duct area
- 61: corner
- 901: battery cell
- 910: battery block
- 912: discharge valve
- 913: cooling path
- 913a: path outlet
- 914: case
- 915: partition
- 916: filter

## Claims

1. A power supply device, comprising:
a battery block including a plurality of battery cells in position, each of the plurality of battery cells including a discharge valve configured to open in response to an internal pressure of the battery cell exceeding a set value; and
a case having a closed structure and housing the battery block, the case including
a mesh portion having a plurality of air holes through which cooling air to cool an internal component is drawn in, each of the plurality of air holes having an opening size (a) less than or equal to 4 mm,
an expansion chamber between an inner surface of the case including the mesh portion and the battery block to receive a jet substance discharged from the plurality of battery cells, and
a guide clearance between the inner surface of the case and the battery block to guide the jet substance discharged from the plurality of battery cells to the expansion chamber,
wherein the plurality of air holes in the mesh portion have a total opening area larger than a cross-sectional area of the guide clearance, and
the power supply device allows the jet substance discharged to the guide clearance and expanding adiabatically to flow into the expansion chamber to be discharged outside the case through the plurality of air holes, and allows the cooling air flowing into the expansion chamber through the plurality of air holes to be blown to a surface of the battery block.

2. The power supply device according to claim 1, further comprising:
a blower fan fixed to the mesh portion in the case, the blower fan being configured to blow the cooling air drawn in or discharged through the plurality of air holes to the guide clearance to cool the battery block.

3. The power supply device according to claim 1, wherein
the opening size (a) of each of the plurality of air holes is less than or equal to 3.5 mm.

4. The power supply device according to claim 1, wherein
the plurality of air holes are slits, and
the mesh portion has the plurality of air holes arranged in multiple rows and parallel to one another.

5. The power supply device according to any one of claims 1 to 4, wherein
the expansion chamber is located in an end portion of the case in a longitudinal direction of the case.

6. The power supply device according to claim 5, wherein
the case includes an end face plate closing an open end of a case body being cylindrical,
the mesh portion is located in the end face plate,
the expansion chamber is located in an end portion of the case body, and
the guide clearance is located along an inner surface of the case body.

7. The power supply device according to claim 6, wherein
the battery block has a discharge surface facing the inner surface of the case body, and the discharge surface includes first end faces of the plurality of battery cells aligned flush with one another, and
the guide clearance is located between the inner surface of the case body and the discharge surface of the battery block.

8. The power supply device according to claim 7, further comprising:
a hit wall at a hitting position of the jet substance discharged from the guide clearance, the hit wall being configured to disperse the jet substance.
